Europäisches Patentamt

European Patent Office

Office européen des brevets

(19)

(11) EP 0 694 004 B1

(12) **EUROPÄISCHE PATENTSCHRIFT**

(45) Veröffentlichungstag und Bekanntmachung des Hinweises auf die Patenterteilung:
**11.06.1997 Patentblatt 1997/24**

(51) Int Cl.6: **B60T 8/40**, B60T 8/48, B60T 8/24, B60T 7/12, B60T 13/66

(21) Anmeldenummer: **94913074.4**

(22) Anmeldetag: **29.03.1994**

(86) Internationale Anmeldenummer:
**PCT/EP94/00981**

(87) Internationale Veröffentlichungsnummer:
**WO 94/23976 (27.10.1994 Gazette 1994/24)**

(54) **FREMDKRAFTBREMSSYSTEM FÜR KRAFTFAHRZEUGE**

POWER-BRAKE SYSTEM FOR MOTOR VEHICLES

SYSTEME DE FREINAGE ASSISTE POUR VEHICULES AUTOMOBILES

(84) Benannte Vertragsstaaten:
**DE FR GB**

(30) Priorität: **16.04.1993 DE 4312404**

(43) Veröffentlichungstag der Anmeldung:
**31.01.1996 Patentblatt 1996/05**

(73) Patentinhaber: **ITT Automotive Europe GmbH 60488 Frankfurt am Main (DE)**

(72) Erfinder: **ECKERT, Alfred D-55130 Mainz (DE)**

(56) Entgegenhaltungen:
**EP-A- 0 226 803**       **EP-A- 0 265 623**
**EP-A- 0 410 891**       **DE-A- 4 029 793**

**Beschreibung**

Die Erfindung bezieht sich auf ein Kraftfahrzeugfremdkraftbremssystem mit einer zentralen Druckquelle, mit einem Hydrauliksystem, das Druckmittelleitungen, die die Radbremsen des Kraftfahrzeugs mit der Druckquelle verbinden, und elektrisch steuerbare Hydraulikventile umfaßt und Druckmittelblenden enthält, mit einem elektronischen Regler zur Erzeugung von Ventilsteuersignalen und zur Regelung des Bremsdruckes in den Radbremsen in Abhängigkeit von Druckmeßsignalen sowie mit einem am Ausgang der Druckquelle angeordneten Drucksensor.

Ein Fremdkraftbremssystem dieser Art wird grundsätzlich immer dann benötigt, wenn eine Radbremse unabhängig von der Betätigung der Bremsanlage durch den Fahrer aktiviert werden soll. Ein bekanntes Beispiel für die Anwendung eines solchen Systems ist die Antriebsschlupfregelung (ASR) durch Bremseneingriff. Bei diesen Systemen wird der Bremsdruck in Abhängigkeit von dem Drehverhalten der durchdrehenden bzw. instabilen Räder geregelt.

Ferner sind Bremssysteme denkbar und in der Entwicklung, die als Maßnahme zur Unfallverhütung automatisch aktiviert werden, sobald der Abstand zwischen dem Kraftfahrzeug und dem vorausfahrenden Fahrzeug oder einem anderen Hindernis zu gering wird. Geschwindigkeitsregelanlagen benötigen ebenfalls in manchen Situationen einen Bremseneingriff. Für solche Anlagen ist das Raddrehverhalten keine geeignete Regelgröße; der Regelungseingriff setzt kein Instabilwerden eines Rades voraus.

Das Einregeln eines vorgegebenen, veränderlichen bzw. von bestimmten Bedingungen abhängigen Bremsdruckes bereitet Schwierigkeiten. Bekannt sind Steuersysteme, die mit festgelegtem Pulsraster arbeiten und dieses Pulsraster erforderlichenfalls in Abhängigkeit von Fahrzeugreaktionen modifizieren. Diese Systeme sind relativ ungenau und können nur grobe Drucksprünge realisieren. Außerdem besteht eine verhältnismäßig starke Abhängigkeit des Bremsdruckes von der Umgebungs- und Betriebstemperatur.

Außerdem sind Regelungssysteme bekannt, die auf eine unmittelbare Messung des Bremsdruckes in den einzelnen Radbremsen nicht verzichten können. Es sind somit mehrere Drucksensoren, mindestens ein Sensor pro Bremssattel, der außerdem in Nähe des Bremssattels angeordnet sein muß, erforderlich.

Aus der DE-A-40 29 793 ist bereits eine hydraulische Fahrzeugbremsanlage bekannt, die eine zentrale Druckquelle und Hydraulikventile besitzt, mit denen sowohl eine Verstärkerfunktion als auch eine Blockierschutzregelung und eine Antriebsschlupfregelung möglich sein soll. Außerdem ist die Anlage zur Fahrdynamikanpassung im Teilbremsbereich und sogar als ferngesteuerte Bremsanlage vorgesehen. Zum Ausüben dieser Funktionen wird mit einem Hydraulikventil der Druckmittelweg von dem Hauptzylinder der Bremsanlage zu den Radbremsen unterbrochen und die Hilfsdruckquelle angeschaltet. Mit Hilfe von Drucksensoren wird dann der Druck am Ausgang des Hauptzylinders, also vor dieser Trennstelle, und der mit Hilfe der Druckquelle eingesteuerte Druck, also der Druck nach der Trennstelle, gemessen und zur Drucksteuerung oder Druckregelung ausgewertet. Dies bedeutet einen erheblichen Aufwand.

Der Erfindung liegt nun die Aufgabe zugrunde, ein Fremdkraftbremssystem zu entwickeln, das ein kontinuierliches Einregeln eines vorgegebenen, veränderlichen Bremsdrucks erlaubt und das sich mit vergleichsweise geringem Herstellungsaufwand realisieren läßt. Das Bremssystem soll sich in einem weiten Arbeitsbereich stabil verhalten und gegenüber Schwankungen der Hydraulikparameter, bedingt z.B. durch Temperaturänderungen, Alterung, Verschleiß oder Fertigungstoleranzen, unempfindlich sein.

Es hat sich gezeigt, daß diese Aufgabe durch ein System mit den im Anspruch 1 beschriebenen Merkmalen gelöst werden kann.

Auf einige vorteilhafte Ausführungsbeispiele der Erfindung beziehen sich die Unteransprüche.

Das erfindungsgemäße Fremdkraftbremssystem benötigt zur Ermittlung der Regelgröße lediglich einen Drucksensor, der am Ausgang der Druckquelle angeordnet ist und mit dessen Hilfe bei Kenntnis des hydraulischen Leitwerts zwischen Druckquelle und Radbremsen der Bremsdruck in den Radbremsen auf den gewünschten Wert eingeregelt werden kann. Der hydraulische Leitwert ist von Druckmittelblenden abhängig, die in dem Hydrauliksystem ohnehin vorhanden sind oder durch zusätzliche Bauteile auf den erforderlichen Wert eingestellt werden können; der Leitwert kann aus der Konstruktion des hydraulischen Systems, den Ventilcharakteristiken und aus den Radbremsen-Kennlinien errechnet oder empirisch bestimmt werden. Durch solche Blenden - im Gegensatz zu Drosselstellen - wird eine weitgehende Temperaturunabhängigkeit erreicht.

Weitere Merkmale, Vorteile und Anwendungsmöglichkeiten der Erfindung gehen aus der folgenden Beschreibung der Erfindung anhand der beigefügten Darstellungen hervor.

Es zeigen

Fig. 1 in schematischer Vereinfachung die wichtigsten hydraulischen Komponenten und den hydraulischen Schaltplan eines Fremdkraftbremssystems nach der Erfindung in Verbindung mit einer blockiergeschützten Bremsanlage (ABS),

Fig. 2 das Ersatzbild des hydraulischen Leitwerts des hydraulischen Systems nach Fig. 1 für den Druckaufbau und den Druckabbau,

Fig. 3    schematisch den Regelkreis eines Fremdkraftbremssystems nach der Erfindung, und

Fig. 4    im Diagramm den Druckverlauf in den Radbremsen und am Ausgang der zentralen Druckquelle in einem Regelungsbeispiel bei Anwendung der Bremsanlage nach Fig. 1.

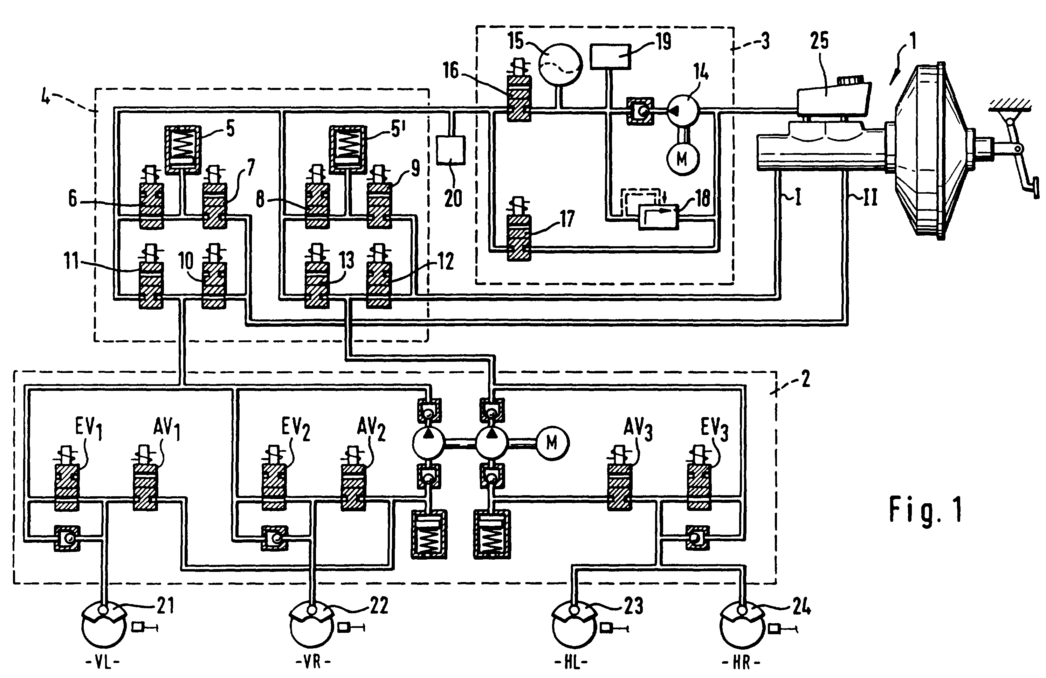

Das Bremssystem nach Fig. 1 besteht im wesentlichen aus einem zweikreisigen hydraulischen Bremsdruckgeber 1, aus einer kompletten ABS-Ventil- und Hydraulikeinheit 2, aus einer für das Fremdkraftbremssystem vorgesehenen zentralen Druckquelle 3 und aus einer Zusatz-Ventileinheit 4, die zur Umschaltung von der Betriebsbremse (1) auf das Fremdkraftbremssystem dient. Außerdem enthält die Zusatz-Ventileinheit 4 pro Hydraulikkreis I,II noch einen federbelasteten Speicher 5,5', der zusammen mit den zugehörigen Ventilpaaren 6,7;8,9 zur Pedalwegsimulation im Fremdkraftbremsbetrieb dient.

Zum besseren Verständnis wurde im Ausführungsbeispiel nach Fig. 1 eine völlige Trennung der Ventil- und Hydraulikeinheiten 2,3,4 gewählt. Aus Kostengründen dürfte in der Praxis eine Mehrfach-Ausnutzung einzelner Hydraulikkomponenten, d.h. von Ventilen und der Energieversorgung, und damit eine Vereinfachung der hydraulischen Gesamtschaltung bevorzugt werden.

Die Druckquelle 3 der erfindungsgemäßen Fremdkraftbremsanlage besteht im wesentlichen aus einer elektromotorisch angetriebenen Hydraulikpumpe 14, aus einem Hydraulikspeicher 15 und aus zwei 2/2-Wegeventilen 16,17, die als SG-Ventile (stromlos geschlossene Ventile) ausgebildet sind. Außerdem sind ein Druckbegrenzungsventil 18 und ein Druckschalter 19, der die Einhaltung eines vorgegebenen Druckes im System durch Ein- und Ausschalten der Pumpe 14 sicherstellt, vorhanden. Schließlich ist am Ausgang der Druckquelle 3 noch ein Drucksensor 20 angeordnet, aus dessen Ausgangssignale ($P_{mess}$) erfindungsgemäß die Höhe des Bremsdruckes in den einzelnen Radbremsen 21 - 24 errechnet wird.

Das Hydrauliksystem des Fremdkraftbremssystems nach Fig. 1 enthält in dem Weg von der zentralen Druckquelle 3 bis zu den einzelnen Radbremsen 21 bis 24, wobei die Situation nach Umschaltung der "Trennventile" 10,11;12,13 betrachtet wird, eine oder mehrere Blenden, die als Bestandteile der Ventile 11,13,$EV_1$ - $EV_3$ oder als zusätzliche (nicht gezeigte) diskrete Komponenten ausgebildet sind. Der hydraulische Gesamtleitwert dieser Blenden jedes Druckmittelweges von der Druckquelle 3 bis zur jeweiligen Radbremse ist in den Gleichungen mit D bezeichnet; der hydraulische Blendenleitwert D kann errechnet oder empirisch ermittelt werden.

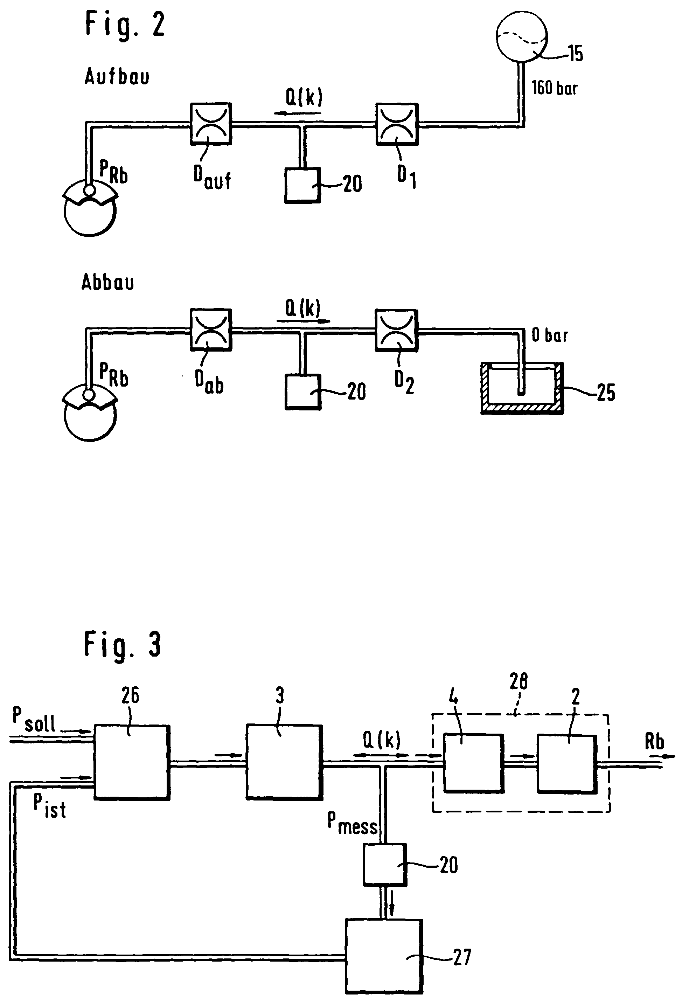

Fig. 2 zeigt das Ersatzbild der Hydraulik des Fremdkraftbremssystems nach der Erfindung, und zwar für die Druckaufbau- und die Abbauphase. Die Blenden $D_{auf}$,$D_{ab}$ symbolisieren den hydraulischen Blendenleitwert zwischen der Druckquelle 3 und den Radbremsen 21 - 24 des Systems nach Fig. 1 für den Druckaufbau ($D_{auf}$) und für den Druckabbau ($D_{ab}$), die Blenden $D_1$, $D_2$ den hydraulischen Leitwert im Anschlußweg zu dem Hydraulikspeicher 15 bzw. zum Druckausgleichsbehälter 25. Es wurden für den Drucksensor 20 und für die Radbremsen 21 (22 bis 24) dieselben Bezugsziffern wie für die entsprechenden Elemente in der Schaltung nach Fig. 1 gewählt.

Die Regelschaltung nach Fig. 3 veranschaulicht die Arbeitsweise des Fremdkraftbremssystems nach Fig. 1. Ein elektronischer Regler, der Bestandteil der ABS-Elektronik sein kann, ist mit 26 bezeichnet. Der Solldruck $P_{soll}$ wird dem Regler 26 je nach Anwendungsfall durch einen Sensor, durch einen Potentiometer oder durch ein digitales Signal vorgegeben. Diese Sollwert-Vorgabe bestimmt den gewünschten Bremsdruck $P_{Rb}$ in den Radbremsen 21 bis 24, wobei natürlich der mathematische Zusammenhang zwischen Sollwert-Vorgabe und Bremsdruck $P_{Rb}$ in den einzelnen Radbremsen 21 bis 24 in Abhängigkeit von der jeweiligen Bremsencharakteristik, der Belastung des Rades (Vorderrad oder Hinterrad) usw. in vielen Fällen verschieden ist. Die Höhe des Druck-Istwertes $P_{ist}$ wird erfindungsgemäß ausschließlich durch Messung und Auswertung des Druckes $P_{mess}$ am Ausgang der Druckquelle 3 mit Hilfe des Drucksensors 20 bestimmt, wobei ausgenutzt wird, daß der Druck in den Radbremsen $P_{Rb}$ bei der hier wiedergegebenen Anordnung näherungsweise eine Funktion des hydraulischen Blenden-Leitwertes D und des am Ausgang der Druckquelle 3 eingestellten, gemessenen Druckes $P_{mess}$ ist. Das die Blende enthaltende, den hydraulischen Leitwert D aufweisende hydraulische System ist in Fig. 3 durch einen Block 28, der die beiden hydraulischen Einheiten 4 und 2 (siehe Fig. 1) umfaßt, symbolisiert. An die Einheit 2 schließen sich die Radbremsen Rb an.

Um die Regelgröße $P_{Rb}$, also den Druck in der Radbremse, zu ermitteln, wird mit Hilfe eines Rechenschaltkreises oder "Beobachters" 27 (siehe Fig. 3) eine nichtlineare Zustandsgrößenrekonstruktion durchgeführt. Hierzu werden folgende rechnerische Schritte rekursiv durchgeführt:

$$Q(k) = D \sqrt{(P_{mess}(k) - P_{Rb}(k\text{-}1)} \cdot \text{sign}(P_{mess}(k) - P_{Rb}(k\text{-}1),$$

$$v(k) = v(k\text{-}1) + T_o \cdot Q(k)$$

$$P_{Rb}(k) = f(v(k)).$$

"Q(k)" ist der Volumenstrom in der Anlage zum Abtastzeitpunkt k. "v(k)" ist das Druckmittel-Volumen in der Radbremse zum Abtastzeitpunkt k. "$P_{Rb}(k)$" ist der Druck in der Radbremse zum Abtastzeitpunkt k.

Es wird somit durch Messung des Druckes $P_{mess}$ vor einer Blende, deren Leitwert mit D bezeichnet ist, der Volumenstrom Q(k), welcher in dem System fließt, abgeschätzt. Unter Berücksichtigung der Systemkennlinie wird dann der Bremsdruck $P_{Rb}$ bestimmt.

Dieser rekonstruierte Radbremsdruck $P_{Rb}$ bildet den Ist-Wert $P_{ist}$ für den Regler 26, der die zum Erreichen des Solldrucks $P_{soll}$ erforderliche Einschaltdauer der Ventile 16,17 (siehe Fig. 1) der Druckquelle 3, insbesondere des den Druckaufbau steuernden 2/2-Wegeventils 16, berechnet. Diese Berechnung richtet sich ebenfalls nach einem hydraulischen Modell, vergleiche Fig. 2, das mathematisch wie folgt zu beschreiben ist (v ist wiederum das Druckmittel-Volumen in der Radbremse; $v_o$ das Druckmittel-Volumen zum Startzeitpunkt der Berechnung):

$$P_{Rb} = av_o + bv_o^2$$

$$P_{soll} = a\,(v_o + T_v Q) + b(v_o + T_v Q)^2$$

$$P_{soll} - P_{Rb} = a\,T_v Q + b\,T_v^2\,Q^2 + 2b\,T_v Q v_o$$

$$v_o = \frac{\sqrt{a^2 + 4\,b\,P_{Rb}} - a}{2\,b}$$

also

$$T_v = \frac{1}{2bQ}\,(\,\sqrt{a^2 + 4b\,P_{soll}} - \sqrt{a^2 + 4b\,P_{Rb}}\,)$$

In diesen Formeln bedeuten

a, b        Modellparameter bzw. Konstanten der Radbremse,
$T_v$        Summe der Ventileinschaltzeiten
$P_{soll}$        Drucksollwert
$P_{Rb}$        geschätzter Druck in der Bremse

Für den Volumenstrom Q gelten normalerweise in der Druckaufbauphase und Druckabbauphase unterschiedliche hydraulische Blenden-Leitwerte $D_{auf}, D_{ab}$, weil z.B. die in der Hydraulikeinheit 2 vorhandenen Rückschlagventile - siehe Fig. 1 - nur in einer Richtung des Druckmittelflusses wirken. Für einen Druckaufbau mit einem hydraulischen Leitwert $D_{auf}$ aus einer Druckquelle mit $P_{Speicher}$ 160 bar (siehe Fig. 2) gilt in der Druckaufbauphase für den Volumenstrom Q näherungsweise:

$$Q_{auf} = D_{auf}\,\sqrt{P_{Speicher} - P_{Rb}} = D_{auf}\,\sqrt{160 - P_{Rb}}$$

Für den Druckabbau in einen drucklosen Druckausgleichsbehälter 25 (siehe Fig. 1) gilt entsprechend die Beziehung:

$$Q_{ab} = D_{ab}\,\sqrt{P_{Rb}}$$

Ist das Ergebnis der Subtraktion der beiden Wurzeln größer als 0, wird ein Druckaufbau eingeleitet, bei negativem Ergebnis wird über das Ventil 17 (siehe Fig. 1) der Druckquelle 3 der Druck abgebaut.

Die erfindungsgemäße Steuerung oder Regelung des Bremsdruckes durch alleinige Messung des Druckes am Ausgang der Druckquelle 3 unter Ausnutzung des hydraulischen Blenden-Leitwertes D, $D_{auf}, D_{ab}$ des Hydrauliksystems zeichnet sich aus durch große Stabilität und Unabhängigkeit von Temperatureinflüssen, Alterung, variablen Ventilschaltzeiten usw.. Da keine Messung des Druckes am Rad erfolgt und daher nur ein einziger Drucksensor (20) im gesamten System erforderlich ist, wird der Herstellungsaufwand relativ gering.

Fremdkraftbremssysteme der erfindungsgemäßen Art sind, neben den eingangs genannten Anwendungen, auch zur Fahrstabilitätsregelung, für Systeme, bei denen der Betätigungsbefehl ausschließlich elektrisch übertragen wird (brake-by-wire) oder für Bremsensysteme in Elektrofahrzeugen geeignet.

Die vorgenannten Gleichungen können auch durch Linearisierung der Zusammenhänge vereinfacht werden, was zu vereinfachten Rechnersystemen bei hinreichender Genauigkeit führt.

Für die linearisierte Zustandsrekonstruktion gilt die Beziehung

$$P_{Rb}(k) = F(P_{lin}) \cdot P_{Rb}(k-1) + (1-F(P_{lin})) \cdot P_{mess} + Fak(P_{lin}) \cdot Q_o,$$

wobei $F$, $Q_o$, $Fak$ Funktionen des Linearisierungspunktes auf der bekannten Druck-Volumen-Kennlinie einer Radbremse bzw. eines hydraulischen Systems sind.

Für den linearisierten Regler gilt

$$T_v = K_r(P_{lin}) \cdot (P_{soll} - P_{Rb}),$$

wobei für den Druckaufbau

$$K_r(P_{lin})_{auf} = \frac{1}{D_{auf} \sqrt{a^2 + 4b\, P_{lin}} \sqrt{P_{Speicher} - P_{lin}}}$$

und für den Druckabbau

$$K_r(P_{lin})_{ab} = \frac{1}{D_{ab} \sqrt{a^2 + 4\, b\, P_{lin}} \sqrt{P_{lin}}}$$

einzusetzen sind. $K_r(P_{lin})_{auf}$ und $K_r(P_{lin})_{ab}$ werden als proportionale Verstärkungsfaktoren des linearisierten Reglers bezeichnet.

Die Werte von $F$, $Fak$, $Q_o$ und $K_r$ können in einer Tabelle abgespeichert werden, um die erforderliche Anzahl an Rechenoperationen zu verringern.

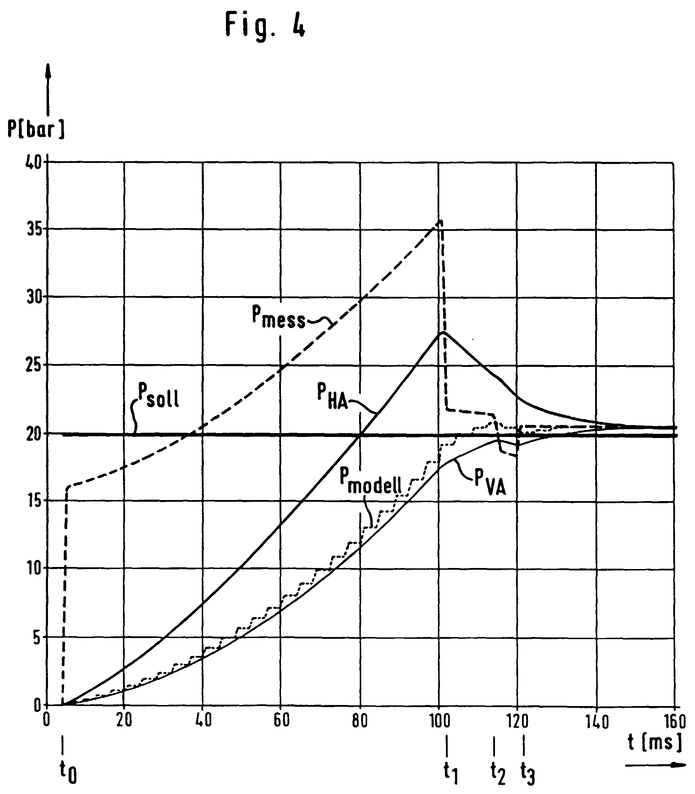

Der Verlauf der Kurven nach Fig. 4 veranschaulicht die Druckregelung des Fremdkraftbremssystems nach der Erfindung. Dargestellt ist der am Ausgang der Druckquelle 3 gemessene Druck $P_{mess}$, der Druck in den Radbremsen der Hinterräder $P_{HA}$ und der Druck in den Radbremsen der Vorderräder $P_{VA}$ über der Zeit t. Außerdem ist rasterförmig der im Rechner ermittelte Druck $P_{modell}$ angedeutet. In dem dargestellten Beispiel ändert sich der Druck in den Rädern der Hinterachse ($P_{HA}$) mit einem wesentlich größeren Gradienten als der Druck an der Vorderachse ($P_{VA}$).

In diesem stark vereinfachten Beispiel nach Fig. 4 ist ein Solldruck $P_{soll}$ von 20 bar vorgegeben. Zum Zeitpunkt $t_o$ wird das zu der Druckquelle 3 - siehe Fig. 1 - gehörende Druckaufbauventil 16 auf Druchlaß geschaltet. Der Regler (26 in Fig. 3) errechnet die zum Erreichen des vorgegebenen Solldruckes nötigen Ventileinschaltzeiten. Erreicht der "Modelldruck" $P_{modell}$ den aus dem vorgegebenen Solldruck abgeleiteten Wert, so schaltet der Regler zum Zeitpunkt $t_1$ auf "Druck Halten". Zum Zeitpunkt $t_2$ setzt im Zuge der Regelung ein Druckabbau ein. Anschließend nähern sich die Drücke in den Hinterrad- und in den Vorderradbremsen weiterhin dem Solldruck $P_{soll}$. Nach dem Zeitpunkt $t_3$ erfolgt keine weitere Ventilbetätigung, da der eingeregelte Druck innerhalb der Regelgenauigkeit liegt. Die Regelung ist also stabil und arbeitet recht genau.

**Patentansprüche**

1.   Kraftfahrzeugfremdkraftbremssystem, mit einer zentralen Druckquelle (3), mit einem Hydrauliksystem (2,4), das Druckmittelleitungen, die die Radbremsen (21 - 24) des Kraftfahrzeuges mit der Druckquelle (3) verbinden, und elektrisch steuerbare Hydraulikventile (3 - 13, $EV_{1,2,3}$, $AV_{1,2,3}$) umfaßt und Druckmittelblenden enthält, mit einem elektronischen Regler zur Erzeugung von Ventilsteuersignalen und zur Regelung des Bremsdruckes in den Radbremsen (21 - 24) in Abhängigkeit von Druckmeßsignalen ($P_{mess}$) sowie mit einem am Ausgang der Druckquelle (3) angeordneten Drucksensor (20), dadurch gekennzeichnet, daß der Bremsdruck ($P_{Rb}$) in den Radbremsen (21 - 24) als Funktion (f) des mit dem Drucksensor (20) gemessenen Druckes ($P_{mess}$) und des hydraulischen Leitwertes (D) der Blende(n) des Hydrauliksystems (2,4), also nach der Funktion

$$P_{Rb} = f \ (D, P_{mess}) \ , \tag{1}$$

ermittelt wird.

2. Bremssystem nach Anspruch 1, dadurch gekennzeichnet, daß der Bremsdruck ($P_{Rb}(k)$) in den Radbremsen (21 - 24) in Abhängigkeit von dem hydraulischen Leitwert (D) und dem am Ausgang der Druckquelle (3) gemessenen Druck ($P_{mess}(k)$) als Funktion (f) Druckmittel-Volumens ($v(k)$) in der Radbremse, also nach der Funktion

$$P_{Rb}(k) = f(v(k)) \tag{2}$$

rekursiv ermittelt wird, mit

$$v(k) = v(k-1) + T_o \ . \ Q(k) \tag{3}$$

und

$$Q(k) = D \ \sqrt{\Delta P} \ . \ sign \ (\Delta P) \tag{4}$$

$$\Delta P = P_{mess}(k) - P_{Rb}(k-1), \tag{5}$$

wobei Q(k) den Volumenstrom in dem Hydrauliksystem, $T_o$ die Abtastzeit und k den jeweiligen Abtastschritt bezeichnen.

3. Bremssystem nach Anspruch 1 oder 2, dadurch **gekennzeichnet**, daß die zentrale Druckquelle (3) eine Hydraulikpumpe (14) und elektrisch umschaltbare Mehrwegeventile (16,17) zur Steuerung des Druckmittel-Zuflusses von der Druckseite der Hydraulikpumpe (14) zu den Radbremsen (21 - 24) und den Druckmittel-Rückfluß zu der Saugseite der Hydraulikpumpe (14) und zu einem Druckausgleichsbehälter (25) enthält.

4. Bremssystem nach Anspruch 3, dadurch **gekennzeichnet**, daß die zentrale Druckquelle (3) zusätzlich einen Hydraulikspeicher (15) enthält.

5. Bremssystem nach Anspruch 3 oder 4, dadurch **gekennzeichnet**, daß zur Steuerung des Druckmittel-Zuflusses und des Druckmittel-Rückflusses je ein in der Ruhestellung sperrendes 2/2-Wegeventil (16,17) vorgesehen sind.

6. Bremssystem nach einem oder mehreren der Ansprüche 1 bis 5, dadurch **gekennzeichnet**, daß die Druckmittelblenden des Hydrauliksystems (2,4) in Form von integralen Bestandteilen der Hydraulikventile (11,13,$EV_1$ - $EV_3$), die sich im Druckmittelweg von der Druckquelle (3) zu den Radbremsen (21 - 24) befinden, und/oder der Druckmittelleitungen ausgebildet sind.

7. Bremssystem nach einem oder mehreren der Ansprüche 1 bis 5, dadurch **gekennzeichnet**, daß in das Hydrauliksystem (2,4) diskrete Blenden eingefügt sind.

8. Bremssystem nach Anspruch 4, dadurch **gekennzeichnet**, daß der Regler (26) die Einschaltzeit ($T_v$) der Mehrwegeventile (16,17) der zentralen Druckquelle (3) nach der Beziehung

$$T_v \ = \ \frac{1}{2bQ} \left( \sqrt{a^2 + 4b \ P_{soll}} \ - \ \sqrt{a^2 \ + \ 4b \ P_{Rb}} \ \right) \quad (6)$$

ermittelt, mit

a, b = Modellparameter bzw. Konstanten der Radbremse,
Q = Druckmittel-Volumenstrom,

wobei für den Druckaufbau ("auf")

$$Q_{auf} = D_{auf} \sqrt{P_{Speicher} - P_{Rd}}$$

und für den Druckabbau ("ab")

$$Q_{ab} = D_{ab} \sqrt{P_{Rb}}$$

gelten und wobei "$P_{Speicher}$" den Speicherdruck und "$P_{soll}$" den Solldruck bezeichnen.

9. Bremssystem nach Anspruch 4, dadurch gekennzeichnet, daß der Regler (26) den Bremsdruck ($P_{Rb}$) in den Radbremsen (21 - 24) durch linearisierte Zustandsrekonstruktion nach der Gleichung

$$P_{Rb}(k) = F(P_{lin}) \cdot P_{Rb}(k-1) + (1-F(P_{lin})) \cdot P_{mess} + Fak(P_{lin}) \cdot Q_o,$$

ermittelt, wobei F, Fak, $Q_o$ Funktionen des Linearisierungspunktes auf der Druck-Volumen-Kennlinie der Radbremse sind, und die Einschaltzeiten ($T_{Vlin}$) der Mehrwegeventile (16,17) nach der Beziehung

$$T_{Vlin} = Kr(P_{lin}) \cdot (P_{soll} - P_{Rb})$$

festlegt, wobei für den Druckaufbau ("auf") die Funktion

$$K_r(P_{lin})_{auf} = \frac{1}{D_{auf} \sqrt{a^2 + 4b \, P_{lin}} \sqrt{P_{Speicher} - P_{lin}}}$$

und für den Druckabbau ("ab") die Funktion

$$K_r(P_{lin})_{ab} = \frac{1}{D_{ab} \sqrt{a^2 + 4 \, b} \sqrt{P_{lin}}}$$

gelten, wobei "lin" "linearisiert" bedeutet und $K_r(P_{lin})$ proportionale Verstärkungsfaktoren des linearisierten Reglers sind und wobei "$P_{Speicher}$" den Speicherdruck und "$P_{soll}$" den Solldruck bezeichnen.

10. Bremssystem nach Anspruch 9, dadurch **gekennzeichnet**, daß zumindest die Werte für die Funktionen F, Fak, $Q_o$ in Abhängigkeit von den Veränderlichen für den Rechenprozeß in einer Tabelle des Reglers (26) gespeichert sind.

11. Bremssystem nach- Anspruch 9 oder 10, dadurch **gekennzeichnet**, daß die Werte der für den Druckaufbau und den Druckabbau geltenden Funktionen $K_r (P_{lin})_{auf}$ und $K_r (P_{lin})_{ab}$ in Abhängigkeit von den Veränderlichen in einer Tabelle des Reglers (26) gespeichert sind.

## Claims

1. An independent-force-operated brake system for automotive vehicles including a central pressure source (3), a hydraulic system (2,4) which comprises pressure medium lines connecting the wheel brakes (21 - 24) of the automotive vehicle to the pressure source (3), electrically controllable hydraulic valves (3 - 13, $EV_{1,2,3}$, $AV_{1,2,3}$) and pressure medium orifices, an electronic control unit for generating valve control signals and controlling the braking pressure in the wheel brakes (21 - 24) in dependence on measured pressure signals ($P_{meas}$), and a pressure sensor (20) arranged at the outlet of the pressure source (3),
characterized in that the braking pressure ($P_{wb}$) in the wheel brakes (21 - 24) is determined as a function (f) of the pressure ($P_{meas}$), measured by means of the pressure sensor (20), and of the hydraulic conductance (D) of the orifice(s) of the hydraulic system (2, 4), i.e., in accordance with function

$$P_{wb} = f\,(D, P_{meas}) \tag{1}.$$

2. Brake system as claimed in claim 1,
characterized in that the braking pressure ($P_{wb}(k)$) in the wheel brakes (21 - 24) is recursively determined in dependence on the hydraulic conductance (D) and on the pressure ($P_{meas}(k)$), measured at the outlet of the pressure source (3), as a function (f) of the pressure medium volume ($v(k)$) in the wheel brake, i.e., in accordance with function

$$P_{wb}(k) = f(v(k)) \tag{2},$$

wherein

$$v(k) = v(k-1) + T_o \cdot Q(k) \tag{3},$$

and

$$Q(k) = D\,\sqrt{\Delta P} \cdot \text{sign}\,(\Delta P) \tag{4},$$

$$P = P_{meas}(k) - P_{wb}(k-1) \tag{5},$$

with $Q(k)$ referring to the volume flow in the hydraulic system, $T_o$ referring to the sampling time, and k referring to the respective sampling step.

3. Brake system as claimed in claim 1 or in claim 2,
characterized in that the central pressure source (3) comprises a hydraulic pump (14) and electrically switchable multi-directional valves (16, 17) for controlling the pressure medium flow from the delivery side of the hydraulic pump (14) to the wheel brakes (21 - 24) and the pressure medium return to the suction side of the hydraulic pump (14) and to a pressure compensation reservoir (25).

4. Brake system as claimed in claim 3,
characterized in that the central pressure source (3) additionally has a hydraulic accumulator (15).

5. Brake system as claimed in claim 3 or in claim 4,
characterized in that one 2/2 way valve (16, 17), blocking in the rest position, each is provided for controlling the pressure medium flow and the pressure medium return.

6. Brake system as claimed in one or in several of claims 1 through 5,
characterized in that the pressure medium orifices of the hydraulic system (2, 4) are designed in the form of integral components of the hydraulic valves (11, 13, $EV_1$ - $EV_3$), located in the pressure medium path from the pressure source (3) to the wheel brakes (21 - 24), and/or the pressure medium lines.

7. Brake system as claimed in one or in several of claims 1 through 5,
characterized in that discrete orifices are inserted into the hydraulic system (2, 4).

8. Brake system as claimed in claim 4,

characterized in that the control unit (26) determines the operating time ($T_v$) of the multi-directional valves (16, 17) of the central pressure source (3) in accordance with the equation

$$T_v = \frac{1}{2bQ} \left( \sqrt{a^2 + 4b\ P_{nom}} - \sqrt{a^2 + 4b\ P_{wb}} \right) \quad (6),$$

wherein

a, b    are model parameters or constants of the wheel brake; and
Q     is the pressure medium volume flow,

with

$$Q_{build} = D_{build} \sqrt{P_{accumumlator}} - P_{wb}$$

applying to the pressure build-up ("build") and

$$Q_{red} = D_{red} \sqrt{P_{wb}}$$

applying to the pressure reduction ("red"),
and "$P_{accumulator}$" referring to the accumulator pressure and "$P_{nom}$" referring to the nominal pressure.

9. Brake system as claimed in claim 4,
characterized in that the control unit (26) determines the braking pressure ($P_{wb}$) in the wheel brakes (21 - 24) by a linearized state reconstruction in accordance with the equation

$$P_{wb}(k) = F(P_{lin}) \cdot P_{wb}(k-1) + (1-F(P_{lin})) \cdot P_{meas} + Fak(P_{lin}) \cdot Q_o,$$

with F, Fak, $Q_o$ being functions of the linearization point on the pressure-volume characteristic curve of the wheel brake, and in that the control unit (26) determines the operating times ($T_{Vlin}$) of the multi-directional valves (16, 17) in accordance with relation

$$T_{Vlin} = Kr(P_{lin}) \cdot (P_{soll} - P_{wb}),$$

with the function

$$K_r(P_{lin})_{build} = \frac{1}{D_{build} \sqrt{a^2 + 4b\ P_{lin}} \sqrt{P_{accumulator} - P_{lin}}}$$

applying to the pressure build-up, and with the function

$$Kr(P_{lin})_{red} = \frac{1}{D_{ab} \sqrt{a^2 + 4b} \sqrt{P_{lin}}}$$

applying to the pressure reduction, with "lin" meaning "linearized" and $K_r(P_{lin})$ being proportional amplification factors of the linearized control unit and "$P_{accumulator}$" being the accumulator pressure, and "$P_{nom}$" referring to the nominal pressure.

10. Brake system as claimed in claim 9,

characterized in that at least the values of the functions F, Fak, $Q_o$ are stored for the computing process in a table of the control unit (26) in dependence on the variables.

11. Brake system as claimed in claim 9 or in claim 10,
characterised in that the values of the functions $K_r (P_{lin})_{build}$ and $K_r (P_{lin})_{red}$ applying to the pressure build-up and to the pressure reduction are stored in a table of the control unit (26) in dependence on the variables.

**Revendications**

1. Système de freinage à actionnement par force extérieure, pour véhicule automobile, comprenant une source de pression (3) centrale, un système hydraulique (2, 4), qui comprend des conduites d'agent de pression reliant les freins de roue (21, 24) du véhicule automobile à la source de pression (3) et des valves hydrauliques à commande électrique (3, 13, $EV_{1,2,3}$, $AV_{1,2,3}$) et qui contient des étranglements d'agent de pression, un régulateur électronique, servant à produire des signaux de commande de valve et à assurer la régulation de la pression de freinage dans les freins de roue (21, 24) en fonction de signaux de mesure de pression ($P_{mes}$), et un capteur de pression (20) disposé à la sortie de la source de pression (3), caractérisé en ce que la pression de freinage ($P_{Rb}$) dans les freins de roue (21 - 24) est déterminée sous forme d'une fonction (f) de la pression ($P_{mes}$) mesurée au moyen du capteur de pression (20) et de la valeur de conduction hydraulique (D) du ou des étranglements du système hydraulique (2, 4), soit conformément à la fonction :

$$P_{Rb} = f(D, P_{mes}) \tag{1}$$

2. Système de freinage selon la revendication 1, caractérisé en ce que la pression de freinage ($P_{Rb}(k)$) dans les freins de roue (21, 24) est déterminée d'une manière récurrente en fonction de la valeur de conduction hydraulique (D) et de la pression ($P_{mes}(k)$) mesurée à la sortie de la source de pression (3), sous forme d'une fonction (f) du volume d'agent de pression (v(k)) dans le frein de roue, soit conformément à la fonction :

$$P_{Rb}(k) = f(v(k)) \tag{2}$$

avec

$$v(k) = v(k-1) + T_o . Q(k) \tag{3}$$

et

$$Q(k) = D \sqrt{\Delta P} . \text{sign} (\Delta P) \tag{4}$$

$$\Delta P = P_{mes}(k) - P_{rb}(k-1) \tag{5}$$

dans lesquelles Q(k) désigne le débit volumique dans le système hydraulique, $T_0$ la durée de détection et k le pas de détection chaque fois utilisé.

3. Système de freinage selon la revendication 1 ou 2, caractérisé en ce que la source de pression (3) centrale contient une pompe hydraulique (14) et des valves à plusieurs voies à commutation électrique (16, 17) servant à commander l'acheminement d'agent de pression, du côté de refoulement de la pompe hydraulique (14) aux freins de roue (21 - 24), et le renvoi d'agent de pression vers le côté d'aspiration de la pompe hydraulique (14) et vers un réservoir d'équilibre de pression (25).

4. Système de freinage selon la revendication 3, caractérisé en ce que la source de pression (3) centrale contient en outre un accumulateur hydraulique (15).

**EP 0 694 004 B1**

5. Système de freinage selon la revendication 3 ou 4, caractérisé en ce que des valves à 2 voies/2 positions (16, 17) bloquant dans la position de repos sont prévues respectivement pour la commande de l'acheminement d'agent de pression et pour la commande du renvoi d'agent de pression.

6. Système de freinage selon une ou plusieurs des revendications 1 à 5, caractérisé en ce que les étranglements d'agent de pression du système hydraulique (2, 4) sont réalisés sous forme de constituants faisant partie intégrante des valves hydrauliques (11, 13, $EV_1$ - $EV_3$) qui sont disposées sur le trajet d'agent de pression menant de la source de pression (3) aux freins de roue (21 - 24), et/ou de constituants faisant partie intégrante des conduites d'agent de pression.

7. Système de freinage selon une ou plusieurs des revendications 1 à 5, caractérisé en ce que des étranglements indépendants sont insérés dans le système hydraulique (2, 4).

8. Système de freinage selon la revendication 4, caractérisé en ce que le régulateur (26) détermine la durée de mise en service ($T_v$) des valves à plusieurs voies (16, 17) de la source de pression (3) conformément à la relation :

$$T_v = [\sqrt{a^2 + 4\, b\, P_{cons}} - \sqrt{a^2 + 4\, b\, P_{Rb}}] / 2bQ$$

avec :

a, b = paramètres de modèle ou constantes du frein de roue,
Q = débit volumique d'agent de pression,

dans lesquelles on doit porter, pour l'établissement de pression ("étab"):

$$Q_{étab} = D_{étab}\, \sqrt{P_{accu} - P_{Rb}}$$

et pour la suppression de pression ("supp"):

$$Q_{supp} = D_{supp}\, \sqrt{P_{Rb}}$$

et dans lesquelles "$P_{accu}$" désigne la pression d'accumulateur et "$P_{cons}$" la pression de consigne.

9. Système de freinage selon la revendication 4, caractérisé en ce que le régulateur (26) détermine la pression de freinage ($P_{Rb}$) dans les freins de roue (21 - 24) au moyen d'une reconstitution de variable d'état linéarisée conformément à l'équation :

$$P_{Rb}(k) = F(P_{lin}) \cdot P_{Rb}(k-1) + (1-F(P_{lin})) \cdot P_{mes} + Fak(P_{lin}) \cdot Q_o$$

dans laquelle F, Fak, Qo sont des fonctions du point de linéarisation sur la caractéristique pression-volume du frein de roue, et les durées de mise en service ($T_{Vlin}$) des valves à plusieurs voies (16, 17) sont établies conformément à la relation :

$$T_{vlin} = K_r(P_{lin}) \cdot (P_{cons} - P_{Rb}),$$

dans laquelle on doit porter, pour l'établissement de pression ("étab"), la fonction :

$$K_r(P_{lin})_{étab} = 1 / [D_{étab}\, \sqrt{a^2 + 4b\, P_{lin}}\, \sqrt{P_{accu} - P_{lin}}\, ]$$

et, pour la suppression de pression ("supp"), la fonction :

$$K_r(P_{lin})_{supp} = 1 / [D_{supp} \sqrt{a^2 + 4b\, P_{lin}} \sqrt{P_{lin}}\,]$$

dans lesquelles "lin" signifie "linéarisée" et $K_r(P_{lin})$ sont des facteurs d'amplification proportionnels du régulateur linéarisé et dans lesquelles "$P_{accu}$" désigne la pression d'accumulateur et "$P_{cons}$" la pression de consigne.

10. Système de freinage selon la revendication 9, caractérisé en ce qu'au moins les valeurs correspondant aux fonctions F, Fak, $Q_o$ sont rangées en mémoire, en fonction des variables correspondant au processus de calcul, dans un tableau du régulateur (26) .

11. Système de freinage selon la revendication 9 ou 10, caractérisé en ce que les valeurs des fonctions $K_r(P_{lin})_{étab}$ et $K_r(P_{lin})_{supp}$ valables pour l'établissement de pression et pour la suppression de pression sont rangées en mémoire en fonction des variables dans un tableau du régulateur (26).

Fig. 1

# Fig. 2

Aufbau

Q(k)

$P_{Rb}$  $D_{auf}$  20  $D_1$  15  160 bar

Abbau

Q(k)

$P_{Rb}$  $D_{ab}$  20  $D_2$  0 bar  25

# Fig. 3

$P_{soll}$  26  3  Q(k)  4  28  2  Rb

$P_{ist}$  $P_{mess}$  20  27

# Fig. 4